(19) Europäisches Patentamt
European Patent Office
Office européen des brevets

(11) EP 3 063 518 B1

(12) EUROPÄISCHE PATENTSCHRIFT

(45) Veröffentlichungstag und Bekanntmachung des Hinweises auf die Patenterteilung:
**29.04.2020 Patentblatt 2020/18**

(21) Anmeldenummer: **14790607.7**

(22) Anmeldetag: **29.10.2014**

(51) Int Cl.:
***G01L 9/00*** (2006.01) ***G01L 9/12*** (2006.01)

(86) Internationale Anmeldenummer:
**PCT/EP2014/073215**

(87) Internationale Veröffentlichungsnummer:
**WO 2015/063150 (07.05.2015 Gazette 2015/18)**

(54) **KAPAZITIVES SENSORELEMENT MIT INTEGRIERTER MESS- UND REFERENZKAPAZITÄT**

CAPACITIVE SENSOR ELEMENT HAVING AN INTEGRATED MEASURING CAPACITANCE AND REFERENCE CAPACITANCE

ÉLÉMENT DÉTECTEUR CAPACITIF À CAPACITÉS DE MESURE ET DE RÉFÉRENCE INTÉGRÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2013 DE 102013222129**

(43) Veröffentlichungstag der Anmeldung:
**07.09.2016 Patentblatt 2016/36**

(73) Patentinhaber: **Hahn-Schickard-Gesellschaft für angewandte Forschung e.V.**
**78052 Villingen-Schwenningen (DE)**

(72) Erfinder:
- **SCHWENK, Adrian**
  **70569 Stuttgart (DE)**
- **FRITZ, Karl-Peter**
  **DE/71101 Schönaich (DE)**
- **BÜLAU, André**
  **70178 Stuttgart (DE)**
- **KLAMT, Ina**
  **70192 Stuttgart (DE)**

(74) Vertreter: **Hersina, Günter et al**
**Schoppe, Zimmermann, Stöckeler Zinkler, Schenk & Partner mbB Patentanwälte**
**Radlkoferstrasse 2**
**81373 München (DE)**

(56) Entgegenhaltungen:
**EP-A1- 2 317 294**
**WO-A1-92/22794**
**DE-A1-102006 039 422**
**DE-A1-102011 075 822**
**US-A- 5 451 940**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung bezieht sich auf ein kapazitives Sensorelement mit integrierter Mess- und Referenzkapazität, und insbesondere auf einen Leiterplatten-basierten, kapazitiven Drucksensor mit integrierter Umweltkompensation.

Kapazitive Drucksensoren werden in der Technik weitverbreitet eingesetzt, wobei zur kapazitiven Erfassung eines Drucks beispielsweise eine Membran mit einem Druck beaufschlagt wird, wodurch sich eine elastische Verformung bzw. eine Auslenkung dieser Membran ergibt. Diese elastische Verformung wird nun kapazitiv erfasst, indem die Membran bzw. eine daran angeordnete Elektrode elektrisch kontaktiert ist und als eine erste Kondensatorelektrode wirksam ist. Die Gegenelektrode bzw. zweite Kondensatorelektrode eines sich daraus ergebenden Plattenkondensators ist gegenüberliegend zu der Membran auf einem Träger angeordnet. Bei einer Verformung der Membran ändert sich somit der Abstand der Kondensatorelektroden des Plattenkondensators, wodurch eine Änderung des Kapazitätswerts des Plattenkondensators hervorgerufen wird.

Die Patentveröffentlichung US 5,451,940 A bezieht sich auf eine Anordnung zur Verarbeitung von Sensorsignalen, die von einem kapazitiven Sensor geliefert werden, der einen Messkondensator mit von einer zu erfassenden physikalischen Messgröße beeinflussbarer Messkapazität und mindestens einen Referenzkondensator mit in anderer Weise beeinflussbarer Referenzkapazität enthält und einen von der Messkapazität und der Referenzkapazität abhängigen Messeffekt liefert. Bei der dort dargestellten Anordnung eines kapazitiven Drucksensors bleibt der Abstand zwischen dem Randbereich der Metallisierung und der gegenüberliegenden ringförmigen Elektrode bei der druckabhängigen Verformung der Membran im Wesentlichen unverändert, da dieser Abstand durch den Abstandsring festgelegt ist.

Eine mögliche Aufbauform eines Leiterplatten-basierten Drucksensors ist beispielsweise in der Patentveröffentlichung DE 102011075822 A1 als Vorrichtung zur kapazitiven Druckbestimmung mit einem Träger dargestellt, der eine erste Kondensatorelektrode trägt. Der Träger kann z.B. eine Leiterplatte sein. Auf dem Träger ist eine Membran mittels Lot befestigt. Die Membran ist als eine der Kondensatorelektroden des Plattenkondensators verschaltet. Bei einer druckinitiierten Abstandsänderung zwischen Membran und Träger ändert sich der Kapazitätswert zwischen der ersten und zweiten Kondensatorelektrode des Plattenkondensators. Der Kapazitätswert bzw. eine Änderung des Kapazitätswerts wird mit einer Ausleseausrichtung ausgelesen, so dass ein Rückschluss auf den anliegenden Druck gezogen werden kann. Eine weitere Drucksensoranordnung nach dem Stand der Technik wird offenbart in EP2317294 A1.

Bei kapazitiven Drucksensoren ist zu beachten, dass parallel geschaltet zur eigentlichen Messkapazität, d.h. derjenigen Kapazität, welche sich durch den angelegten Druck ändern soll, parasitäre Kapazitäten vorhanden sind, die sich unter bestimmten Umwelteinflüssen, z.B. Temperatur oder Feuchte, verändern und so das resultierende Messsignal an der Ausleseeinrichtung verfälschen bzw. driften lassen können. Bei Einwirkung von störenden Umwelteinflüssen wird somit eine Signaländerung detektiert, die nicht ausschließlich auf das Anlegen des zu erfassenden Drucks zurückzuführen ist, wodurch das resultierende Messergebnis beeinträchtigt wird.

Um dieser Messsignalbeeinträchtigung durch störende Umwelteinflüsse entgegenzuwirken, wird bei kapazitiven Drucksensoren eine zweite, hinsichtlich des Aufbaus identische Referenzkapazität aufgebaut, die aber keine Druckbeaufschlagung bzw. druckabhängige Auslenkung einer kapazitiven Messmembran erfährt. So wirken z.B. alle durch Temperatur und/oder Feuchte hervorgerufenen Effekte auf die Messkapazität und die Referenzkapazität, wobei der Druck aber ausschließlich auf die Messkapazität einwirkt. Durch eine geeignete Signalverarbeitung der Messkapazität und der Referenzkapazität kann eine Kompensation bzw. Unterdrückung der parasitiven Effekte erreicht werden, so dass im Wesentlichen der auf die Druckbeaufschlagung zurückzuführende Anteil der Signaländerung erhalten werden kann.

In der Siliziumtechnologie wird häufig ein kapazitiver Drucksensor, z.B. in Polysilizium-Oberflächenmikromechanik, bestehend aus einer druckempfindlichen Drucksensorzelle, einer unempfindlichen Referenzzelle und einem Temperatursensor zur Reduzierung der Temperaturdrift des Sensors aufgebaut. Bei einer Schaltung zur KapazitätsSpannungswandlung mit Referenzelement, wie dies beispielsweise in Fig. 8 dargestellt ist, besteht nun der Sensor, d.h. der kapazitive Drucksensor, aus dem druckempfindlichen Kondensator und einem druckunempfindlichen Referenzkondensator mit den Ruhekapazitäten $C_0$ und $C_0$'. Wenn ein Druck einwirkt, ändert sich die Kapazität des druckempfindlichen Kondensators um $_{\Delta}C$. Bei einer solchen Auswerteschaltung sind ferner weitere Kondensatoren $C_1$ und $C_1$' angeordnet, wobei die Kondensatoren $C_0$, $C_0$', $C_1$ und $C_1$' als Brücke verschaltet sind. Durch eine Veränderung der Kapazitäten $C_1$ und $C_1$' kann die Brücke abgeglichen werden. Als Brückenspannung wird eine Wechselspannung $V_C$ eingekoppelt. Die Kapazitätsänderung moduliert die Amplitude der Wechselspannung, die zwischen den Ausgängen der Operationsverstärker abgegriffen werden kann. Eine abschließende Demodulation wandelt die Kapazitätsänderung in eine Spannungsdifferenz um. Diese Spannungsdifferenz wird von einem Instrumentenverstärker verstärkt und steht als Ausgangssignal $V_{out}$ zur Verfügung. Hinsichtlich einer beispielhaften Verschaltung einer solchen Auswerteschaltung wird auf das prinzipielle Schaltbild von Fig. 8 verwiesen.

Die im Stand der Technik dargestellte Vorgehensweise mit einem geometrisch identischen Aufbau der Messkapazität und der Referenzkapazität ermöglicht zwar eine relativ einfache und genaue Kompensation etwaiger Störeinflüsse, wobei aber aufgrund der erforderlichen Anordnung der Referenzkapazität ein erheblicher Platzbedarf für die Referenzkapazität und damit erhebliche Herstellungskosten für die Mess- und Referenzkapazität anfallen.

Die Aufgabe der vorliegenden Erfindung besteht darin, ein verbessertes kapazitives Sensorelement zu schaffen, das mit einem möglichst geringen zusätzlichen Herstellungsaufwand eine effektive Störeinflusskompensation ermöglicht.

Diese Aufgabe wird durch ein kapazitives Sensorelement mit integrierter Mess- und Referenzkapazität gemäß Anspruch 1 und 9 gelöst.

Erfindungsgemäße Weiterbildungen sind in den Unteransprüchen definiert.

Die vorliegende Erfindung schafft ein kapazitives Sensorelement mit integrierter Mess- und Referenzkapazität. Das kapazitive Sensorelement umfasst einen Träger, der eine Kondensatorelektrode und eine elektrisch davon getrennte Referenzelektrode aufweist, und ferner eine bereichsweise auslenkbare Membran mit einem als Kondensatorgegenelektrode wirksamen Auslenkungsbereich und einem Randbereich, wobei die Membran an einem z.B. umlaufenden Befestigungsabschnitt an dem Träger befestigt ist, und wobei die Kondensatorelektrode und die Kondensatorgegenelektrode die Messkapazität $C_{mess}$ bilden. Die Referenzelektrode bildet zumindest mit einem als Referenzgegenelektrode wirksamen Abschnitt des Randbereichs der Membran die Referenzkapazität, deren Kapazitätswert zumindest eine Komponente eines auf die Messkapazität einwirkenden Störeinflusses wiedergibt.

Die vorliegende Erfindung schafft ferner ein kapazitives Sensorelement mit integrierter Mess- und Referenzkapazität. Das kapazitive Sensorelement umfasst einen Träger, der eine Kondensatorelektrode und eine Referenzelektrodenanordnung aufweist, und eine bereichsweise auslenkbare Membran mit einem als Kondensatorgegenelektrode wirksamen Auslenkungsbereich und einem Randbereich, wobei die Membran an einem Befestigungsabschnitt an dem Träger befestigt ist, und wobei die Kondensatorelektrode und die Kondensatorgegenelektrode die Messkapazität bilden. Die Referenzelektrodenanordnung ist in Metallisierungsebenen des Trägers integriert und bildet die Referenzkapazität, deren Kapazitätswert zumindest eine Komponente eines auf die Messkapazität einwirkenden Störeinflusses wiedergibt.

Der Kerngedanke der vorliegenden Erfindung besteht nun darin, ein kapazitives Sensorelement bereitzustellen, bei dem die metallische und bereichsweise auslenkbare Membran in einem ersten, mittleren Bereich, d.h. dem wirksamen Auslenkungsbereich, als Kondensatorgegenelektrode wirksam ist, und in einem zweiten Bereich, d.h. einem beispielsweise mit einer Erhöhung versehenen Randbereich, als Referenzgegenelektrode wirksam ist. Die bereichsweise auslenkbare Membran weist also einen als Kondensatorgegenelektrode wirksamen Auslenkungsbereich und ferner einen Randbereich auf, wobei der Randbereich bei einer Druckbeaufschlagung der Membran eine deutlich geringere Auslenkung (d.h. effektiven Abstandsänderung) als der Auslenkungsbereich erfährt.

Somit bildet der als Kondensatorgegenelektrode ausgebildete Auslenkungsbereich der Membran mit der an dem Träger angeordneten Kondensatorelektrode die Messkapazität, wobei die ebenfalls auf dem Träger angeordnete Referenzelektrode, die sich z.B. benachbart zu und elektrisch getrennt von der Kondensatorelektrode befindet, mit einem Abschnitt des Randbereichs der Membran, der als die Referenzgegenelektrode wirksam ist, die Referenzkapazität bildet. Der Kapazitätswert der Referenzkapazität gibt somit eine Komponente eines auf die Messkapazität einwirkenden Störeinflusses wieder.

Basierend auf dieser Vorgehensweise ist es möglich, eine Referenzkapazität ohne die Anordnung und Verwendung einer zweiten Membran bereitzustellen, wobei der Kapazitätswert der Referenzkapazität nicht bzw. nur unwesentlich, d.h. um einen Faktor von zumindest 10 oder 100 weniger als der Kapazitätswert der Messkapazität, von einer einwirkenden Druckänderung abhängt, so dass die Referenzkapazität zur Kompensation von störenden Umwelteinflüssen auf die Messkapazität eingesetzt werden kann.

Ein kapazitives Sensorelement weist beispielsweise eine ringförmige, stoffschlüssige Verbindung (z.B. durch ein Hartlot- bzw. Weichlotmaterial) mit dem Träger auf, wobei die Membran angrenzend an den ringförmigen Befestigungsbereich eine ringförmige Erhöhung aufweist, und die Membran in dem als Kondensatorgegenelektrode wirksamen Auslenkungsbereich wiederum im Wesentlichen parallel zu der auf dem Träger angeordneten Kondensatorelektrode angeordnet ist. Bei dem erfindungsgemäßen kapazitiven Sensorelement mit integrierter Mess- und Referenzkapazität wird also die Referenzkapazität $C_{ref}$ in dem Bereich zwischen der Messkapazität (mit Kondensatorelektrode und dem als Kondensatorgegenelektrode wirksamen Auslenkungsbereich) und dem ringförmigen Befestigungsbereich angeordnet, wobei in diesem Bereich die Membran eine ringförmige Erhöhung aufweist.

Durch die ringförmige Erhöhung weist die drucksensitive Membran bei einer Druckbeaufschlagung eine geringere Verformung bzw. Auslenkung als der sich mittig ausgebildete Auslenkungsbereich auf. Aufgrund der größeren Beabstandung zwischen Referenzelektrode und Referenzgegenelektrode bei der Referenzkapazität gegenüber der Beabstandung der Kondensatorelektrode und der gegenüberliegenden Kondensatorgegenelektrode bei der Messkapazität wirkt sich ferner eine noch geringfügig vorhandene Auslenkung der Membran in dem ringförmigen Erhöhungsbereich (Randbereich) erheblich weniger auf den resultierenden Kapazitätswert der Referenzkapazität auswirkt als die Auslenkung der Membran auf die Messkapazität. Somit kann in der Grundfläche eines kapazitiven Sensorelements mit integrierter Messkapazität erfindungsgemäß neben der Messkapazität auch die erforderliche Referenzkapazität zur Kompensation von unerwünschten Umgebungseinflüssen integriert werden, ohne eine zusätzliche Grundfläche auf dem Schaltungssubstrat zu benötigen.

Bevorzugte Ausführungsbeispiele der vorliegenden Erfindung werden nachfolgend Bezug nehmend auf die beiliegenden Zeichnungen näher erläutert. Es zeigen:

Fig. 1 eine Prinzipdarstellung eines kapazitiven Sensorelements gemäß einem Ausführungsbeispiel der vorliegenden Erfindung;

Fig.2 eine Prinzipdarstellung eines kapazitiven Sensorelements mit integrierter Mess- und Referenzkapazität gemäß einem weiteren Ausführungsbeispiel der vorliegenden Erfindung;

Fig. 3 eine Prinzipdarstellung eines kapazitiven Sensorelements mit integrierter Mess- und Referenzkapazität gemäß einem weiteren Ausführungsbeispiel der vorliegenden Erfindung;

Fig.4 eine Prinzipdarstellung eines kapazitiven Sensorelements mit integrierter Mess- und Referenzkapazität gemäß einem weiteren Ausführungsbeispiel der vorliegenden Erfindung;

Fig. 5 eine Prinzipdarstellung eines kapazitiven Sensorelements mit integrierter Mess- und Referenzkapazität gemäß einem weiteren Ausführungsbeispiel der vorliegenden Erfindung;

Fig.6 eine Prinzipdarstellung eines kapazitiven Sensorelements mit integrierter Mess- und Referenzkapazität gemäß einem weiteren Ausführungsbeispiel der vorliegenden Erfindung;

Fig. 7a-b eine Prinzipdarstellung eines kapazitiven Sensorelements mit Messkapazität und einwirkenden parasitären Kapazitäten; und

Fig. 8 eine Prinzipdarstellung einer Schaltung zur Kapazitätsspannungswandlung mit Referenzelement gemäß dem Stand der Technik.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in den unterschiedlichen Ausführungsbeispielen dargestellte Beschreibung dieser Elemente, Objekte und/oder Strukturen untereinander austauschbar ist bzw. aufeinander angewendet werden kann.

Zum besseren Verständnis des erfindungsgemäßen Konzepts wird nun im Folgenden zunächst anhand der Fig. 7a-b das Auftreten unterschiedlicher parasitärer Kapazitäten bei einem kapazitiven Sensorelement mit Messkapazität beschrieben.

Fig. 7a zeigt eine schematische Schnittdarstellung eines kapazitiven Sensorelements 100 mit Messkapazität $C_{mess}$. Das Sensorelement 100 weist einen Träger 102 auf, auf dem eine erste Kondensatorelektrode 104 eines Plattenkondensators vorgesehen ist. Auf dem Träger 102 ist ferner eine Membran 106 an deren Membranbefestigungsabschnitt 107 mittels eines Befestigungsmittels 108, beispielsweise mittels eines Weich- oder Hartlotmaterials, an einem Befestigungsbereich 110 des Trägers 102 befestigt. Die Befestigung ist so ausgeführt, dass ein Auslenkungsbereich 106a der Membran 106 der ersten Kondensatorelektrode 104 gegenüberliegt und so die zweite Kondensatorelektrode bzw. die Kondensatorgegenelektrode bildet. Der Träger 102 weist im Bereich der Kondensatorelektrode 104 eine Durchbohrung 112 (z.B. eine Belüftungsöffnung) auf, über welche die Unterseite der Membran 106 mit einem ersten Druck, z.B. Umgebungsdruck, beaufschlagbar ist.

Fig. 7b zeigt eine schematische Draufsicht auf den Träger 102, der beispielsweise als Leiterplatte ausgeführt ist, zusammen mit dem ringförmigen Befestigungsbereich 110, der auf dem Träger angeordneten Kondensatorelektrode 104 der Messkapazität $C_{mess}$ und der Belüftungsöffnung 112.

In den Fig. 7a-b sind nun die relevanten bzw. bei der Erfassung der Messkapazität $C_{mess}$ zu berücksichtigenden parasitären Kapazitäten in dem kapazitiven Sensorelement 100 prinzipiell dargestellt.

Wie in den Fig. 7a-b dargestellt ist, wird durch die an dem Träger 102 angeordnete Messkondensatorelektrode 104 und den als Kondensatorgegenelektrode wirksamen Auslenkungsbereich 106a der Membran 106 die Messkapazität $C_{mess}$ gebildet, deren Kapazitätswert sich bei einer druckinduzierten Abstandsänderung zwischen Membran 106 und Elektrode 104 ändert. Ferner sind in den Fig. 7a-b drei parasitäre Kapazitäten in dem kapazitiven Sensorelement bzw. der Druckmesszelle angegeben, die einen wesentlichen Einfluss auf die korrekte Erfassung der Messkapazität $C_{mess}$ bewirken können.

Die erste parasitäre Kapazität $C_{par1}$ (auch $C_{p,luft}$) beschreibt im Prinzip die Temperatur- und Feuchteempfindlichkeit der Messkapazität $C_{mess}$ selbst, d.h. Drifts bzw. Verschiebungen, die sich aufgrund der Änderung der Dielektrizitätskonstante der im Zwischenraum bzw. Spalt zwischen den Messelektroden 104 und 106 befindlichen Luft ergeben. Die Änderung der Dielektrizitätskonstante kann beispielsweise durch eine Änderung der Feuchtigkeit der Umgebungsatmosphäre (z.B. der Luftfeuchtigkeit) hervorgerufen werden.

Die zweite parasitäre Kapazität $C_{par2}$ (auch $C_{p,randfeld}$) beschreibt die parasitäre Kapazität zwischen der an dem Träger 102 angeordneten Kondensatorelektrode 104 und den nicht direkt (hinsichtlich der Normalen zur Substratoberfläche) gegenüberliegenden Bereichen der Membran 106. Diese zweite parasitäre Kapazität $C_{par2}$ ist quasi unabhängig von einer Verschiebung der Membran 106.

Eine dritte parasitäre Kapazität $C_{par3}$ (auch $C_{p, Substrat}$) beschreibt die parasitäre Kapazität zwischen der an dem Träger 102 angeordneten Kondensatorelektrode 104 und dem ringförmigen Bereich 110 (zum Herstellen einer Lötverbindung mit der Membran 106). Unter der dritten parasitären Kapazität $C_{par3}$ ist somit diejenige Kapazität zu verstehen, die sich in dem Halbraum unterhalb der an dem Träger angeordneten Kondensatorelektrode 104 befindet. In diesem Zusammenhang ist zu beachten, dass sich im Bereich dieser parasitären Kapazität der Träger 102 befindet. So kann diese dritte parasitäre Kapazität $C_{par3}$ insbesondere dann, wenn beispielsweise aufgrund von Umgebungseinflüssen eine Feuchteaufnahme des Trägers bzw. der Leiterplatte erfolgt, diese dritte parasitäre Kapazität $C_{par3}$ im Träger 102 einen kritischen, hohen Wert annehmen.

Im Folgenden werden nun im Detail anhand der Figuren Ausführungsbeispiele kapazitiver Sensorelemente mit integrierter Mess- und Referenzkapazität beschrieben, wobei die nachfolgenden Ausführungen ferner zeigen werden, dass die genaue geometrische Ausführung und Implementierung der integrierten Referenzkapazität in den jeweiligen kapazitiven Sensorelementen sich danach richten kann, welche der anhand der in Fig. 7a-b beschriebenen parasitären Kapazitäten primär kompensiert werden soll.

Im Folgenden wird nun anhand von Fig. 1 ein Ausführungsbeispiel eines kapazitiven Sensorelements 10 mit integrierter Messkapazität $C_{mess}$ und Referenzkapazität $C_{ref}$ beschrieben.

Wie in Fig. 1 dargestellt ist, weist das kapazitive Sensorelement 10 einen Träger 12 mit einer Kondensatorelektrode 14 und einer elektrisch davon getrennt angeordneten Referenzelektrode 16 auf. Das kapazitive Sensorelement 10 weist ferner eine zumindest bereichsweise auslenkbare Membran 18 auf. Die Membran 18 weist einen als Kondensatorgegenelektrode wirksamen Auslenkungsbereich 18a und einen Randbereich 18b auf. Der Randbereich 18b weist ferner einen Membranbefestigungsabschnitt 18c auf, an dem die Membran 18 mechanisch mit einem z.B. umlaufenden Befestigungsabschnitt 20 an dem Träger 12 befestigt ist. Die Kondensatorelektrode 14 und die Kondensatorgegenelektrode 18a bilden die Messkapazität $C_{mess}$. Die Referenzkapazität $C_{ref}$ wird nun durch die Referenzelektrode 16 und einen als Referenzgegenelektrode wirksamen Abschnitt des Randbereichs 18b der Membran 18 gebildet. Der Kapazitätswert der Referenzkapazität $C_{ref}$ basiert nun zumindest auf einer Komponente eines auf die Messkapazität $C_{mess}$ einwirkenden Störeinflusses.

Die Referenzkapazität $C_{ref}$ weist somit zwei Elektroden auf, d.h. die Referenzelektrode 16, die beispielsweise als eine ringförmige Elektrode 16 auf dem Basissubstrat 12 gebildet ist, und ferner die Referenzgegenelektrode 18b, die als Teil bzw. Abschnitt der Membran 18 im Randbereich 18b der Membran gebildet ist. Die Membran 18 stellt also sowohl für die Messkapazität $C_{mess}$ als auch für die Referenzkapazität $C_{ref}$ jeweils eine Gegenelektrode 18a und 18b bereit, wobei beide Gegenelektroden 18a und 18b beispielsweise elektrisch miteinander verbunden sind. Dies wird beispielsweise dadurch erreicht, dass die (bereichsweise auslenkbare) Membran 18 als eine metallische Membran ausgebildet ist oder eine flächige Metallisierung auf einem Oberflächenbereich derselben aufweist.

Bezüglich der nachfolgenden Beschreibung wird darauf hingewiesen, dass die beispielsweise kreisförmige Kondensatorelektrode 14 auf dem Träger 12 (Basissubstrat) auch als Messelektrode 14 bezeichnet werden kann.

Die beispielsweise ringförmige Referenzelektrode 16 befindet sich also (hinsichtlich der Normalen zur Oberfläche des Trägers 12) gegenüberliegend zu dem Bereich 18b der Membran 18 mit der ringförmigen Erhöhung. Somit ist der Grundabstand bzw. der effektive Abstand zwischen der Referenzelektrode 16 und der Membran 18 in dem Randbereich 18b deutlich größer als der Grundabstand bzw. effektive Abstand zwischen der Kondensatorelektrode 14 und dem als Kondensatorgegenelektrode wirksamen Auslenkungsbereich 18a der Membran 18. Dementsprechend wirkt sich eine (z.B. druckinduzierte) Auslenkung der Membran 18, die i.A. relativ klein ist, und somit eine entsprechende Abstandsänderung zwischen der Membran 18 und den Elektroden 14 und 16 deutlich schwächer auf die Referenzkapazität $C_{ref}$ zwischen der ringförmigen Referenzelektrode 16 und der Membran 18 als auf die Messkapazität $C_{mess}$ zwischen der Messelektrode 14 und dem Auslenkungsbereich 18a der Membran 18 aus. Eine Abstandsänderung der Membran 18 kann z.B. je nach anwendungsspezifischer Ausgestaltung des kapazitiven Sensorelements in einem Bereich von 200 $\mu$m oder auch darunter (z.B. in einem Bereich unter 50 $\mu$m) liegen,

Somit kann diese durch die Referenzelektrode 16 und die Membran 18 gebildete Referenzkapazität $C_{ref}$ also in erster Näherung unabhängig von einer druckinduzierten Verformung bzw. einer Auslenkung der Membran 18 angesehen werden, und somit als Referenzkapazität $C_{ref}$ zur Kompensation von parasitären Kapazitäten dienen bzw. herangezogen werden.

Die obigen Ausführungen hinsichtlich einer geringeren Sensitivität bzw. Empfindlichkeit der Referenzkapazität $C_{ref}$ gegenüber einer Abstandsänderung der jeweiligen gegenüberliegenden Elektroden lassen sich aus den folgenden allgemeinen Betrachtungen ableiten.

So ist die geringere Sensitivität eines Kondensators auf eine Abstandsänderung der Kondensatorplatten bei einem höheren Grundabstand der Kondensatorplatten direkt aus der Formel für die resultierende Kapazität eines Plattenkondensators ersichtlich:

$$C = \varepsilon_0 * \varepsilon_r * A/d,$$

mit d = der effektive Abstand der Kondensatorplatten und A = die effektive Fläche einer Kondensatorplatte.

Da der Abstand d im Nenner der obigen Gleichung für die Kapazität eines Plattenkondensators steht, erhält man eine Hyperbel, wenn die resultierende Kapazität C über dem Abstand d dargestellt wird. Daraus wird ersichtlich, dass sich die resultierende Kapazität eines Plattenkondensators exponentiell mit einem sich verringernden Abstand der Kondensatorplatten erhöht, und dass bei einer Auslenkung der Membran 18 die daraus resultierende relative Änderung der Referenzkapazität $C_{ref}$ deutlich geringer als die daraus resultierende relative Änderung der Messkapazität $C_{mess}$ ist.

Im Folgenden wird nun allgemein auf verschiedene Eigenschaften der anhand von Fig. 1 beschriebenen Elemente des erfindungsgemäßen kapazitiven Sensorelements 10 eingegangen.

Wie bereits oben angegeben wurde, kann die bereichsweise auslenkbare Membran 18 als eine metallische Membran (bzw. Metallmembran) oder als eine an einem Oberflächenbereich mit einer Metallisierung versehene Membran ausgebildet sein. Der Träger 12 kann ein Substrat (z.B. Schaltungssubstrat) aus einem isolierenden Material aufweisen, und eine Leiterplatte, eine Keramikplatine oder ein spritzgegossener Schaltungsträger (MID = Moulded Interconnect Devices) sein. Die Referenzelektrode 16 kann ringförmig oder auch elliptisch oder allgemein als regelmäßiges Polygon ausgebildet sein und bezogen auf eine Normale zur Substratoberfläche zumindest bereichsweise dem Randbereich 18b gegenüberliegen. Beispielsweise aufgrund der ringförmigen Erhöhung des Randbereichs 18b der Membran 18 ist zumindest der Abschnitt des Randbereichs 18b der Membran 18, der mit der Referenzelektrode 16 des Trägers 12 die Referenzkapazität $C_{ref}$ bildet, so hinsichtlich des resultierenden, effektiven Abstands zwischen dem Referenzelektrodenpaar 16, 18b ausgebildet, dass bei einer Auslenkung der Membran 18 die daraus resultierende relative Änderung der Referenzkapazität $C_{ref}$ weniger als 10% (oder als 1%) der relativen Änderung der Messkapazität $C_{mess}$ beträgt.

Diese verringerte Abhängigkeit der resultierenden Referenzkapazität $C_{ref}$ von einer Auslenkung der Membran 18 gegenüber der Messkapazität $C_{mess}$ wird beispielsweise durch die ringförmige Erhöhung der Membran 18 im Randbereich 18b erreicht.

Wie aus Fig. 1 ersichtlich ist, weist der Randbereich 18b ferner einen Membranbefestigungsabschnitt 18c auf, an dem die Membran 18 mechanisch mit dem Befestigungsabschnitt 20 an dem Träger 12 verbunden ist. Dabei erstreckt sich der Randbereich 18b von dem Auslenkungsbereich 18a zu dem Membranbefestigungsabschnitt 18c. Dabei kann beispielsweise die Membran 18 an dem Membranbefestigungsabschnitt 18c mittels eines Weich- oder Hartlotmaterials oder eines Klebstoffes an dem Befestigungsabschnitt 20 des Trägers 12 befestigt sein.

Im Folgenden wird nun anhand von Fig. 2 eine mögliche Ausführungsform des erfindungsgemäßen kapazitiven Sensorelements 10 mit integrierter Mess- und Referenzkapazität, das in einem Gehäuse untergebracht ist, dargestellt.

Fig. 2 zeigt somit eine schematische Schnittdarstellung eines kapazitiven Sensorelements 10 mit integrierter Mess- und Referenzkapazität zur kapazitiven Druckbestimmung. Das kapazitive Sensorelement 10 weist den Träger 12 auf, auf dem die Messelektrode (Kondensatorelektrode) 14 und die elektrisch davon getrennte Referenzelektrode 16 angeordnet sind. Auf dem Träger 12 ist die Membran 18 mittels eines Befestigungsmittels in dem Befestigungsbereich 18c an dem Befestigungsabschnitt 20 des Trägers 12 befestigt. Die Befestigung ist so ausgeführt, dass der als Kondensatorgegenelektrode wirksame Auslenkungsbereich 18a der Membran 18 in einem definierten Abstand der Messelektrode 14 der resultierenden Messkapazität $C_{mess}$ gegenüberliegt. Der Träger 12 weist im Bereich der Messelektrode 14 (beispielsweise mittig) eine Durchbohrung 24 auf, über welche die Unterseite der Membran 18 mit einem ersten Druck $P_1$, z.B. einem Umgebungsdruck, beaufschlagbar ist. Auf der oberen Seitenfläche des Trägers 12, auf der die Membran 18 angebracht ist, ist ein Gehäuseelement 26 vorgegeben, das eine Druckkammer 28 definiert. Ferner kann ein Dichtring 30 zwischen dem Gehäuseelement 26 und dem Träger 12 vorgesehen sein. Das Gehäuseelement 26 weist einen Druckanschluss 32 auf, über welchen die Druckkammer 28 und somit die Membranoberseite mit einem zweiten Druck $P_2$, z.B. einem zu messsenden Druck, beaufschlagbar ist.

Fig. 3 zeigt nun eine schematische Draufsicht auf ein Ausführungsbeispiel eines Trägers 12 für das kapazitive Sensorelement 10, der beispielsweise als eine Leiterplatte ausgeführt ist, zusammen mit der zugehörigen, bei diesem Ausführungsbeispiel runden, kreisförmigen Membran 18, die separat neben dem Träger 12 dargestellt ist. Der Träger 12 weist neben einer Auswerteelektronik 34 die Kondensatorelektrode bzw. Messelektrode 14 und die Referenzelektrode 16 sowie den Befestigungsabschnitt 20 auf. Der Befestigungsabschnitt 20 ist beispielsweise durch einen metallischen Ring auf dem Träger 12 gebildet. Bei der Membran 18, die bei dem Ausführungsbeispiel aus Metall ausgeführt ist oder eine leitfähige Beschichtung bzw. Metallisierung aufweist und damit leitfähig ist, ist der kreisförmige Auslenkungsbereich 18a, der Randbereich 18b und der Membranbefestigungsabschnitt 18c dargestellt. Der kreisförmige Auslenkungsbereich 18a befindet sich somit innerhalb der ringförmigen Erhöhung des Randbereichs 18b, die beispielsweise einen elastisch verformbaren Bereich der Membran 18 bildet. An der Membran 18 ist der Membranbefestigungsabschnitt 18c vorgesehen, der an dem ringförmigen Trägerbefestigungsabschnitt 20 mittels eines Befestigungsmittels, z.B. mittels Weichlot, mechanisch befestigt wird.

Um das in Fig. 3 beschriebene kapazitive Sensorelement 10 für eine primäre Kompensation der ersten und zweiten parasitiven Kapazität ($C_{par1}$, $C_{par2}$ ($C_{p,Luft}$ bzw. $C_{p,Randfeld}$)) auszulegen, ist die ringförmige Referenzelektrode 16 so ausgebildet, dass diese beispielsweise (innerhalb eines Toleranzbereichs von kleiner gleich 10%) die gleiche Grundfläche wie die Messelektrode 14 oder beispielsweise (optimalerweise) die identische Grundfläche aufweist. Fig. 3 zeigt nun eine mögliche Ausführungsform (mit nicht vollständig) flächengleicher Mess- und Referenzelektrode 14, 16 (als Footprint des Basissubstrats 12).

Im Folgenden wird nun anhand von Fig. 4 ein weiteres Ausführungsbeispiel für ein kapazitives Element 10 und insbesondere für die Ausbildung der Referenzelektrode 16 dargestellt, wobei in Fig. 4 anhand einer schematischen Draufsicht auf ein Ausführungsbeispiel eines Trägers 12 als primäre Kompensation die dritte parasitäre Kapazität $C_{par3}$ (die parasitäre Substratkapazität $C_{p,Substrat}$) vorgesehen ist.

Wie in Fig. 4 dargestellt ist, ist die dort dargestellte Anordnung für ein kapazitives Element 10 bis auf die angepasste ringförmige Referenzelektrode 16-1 und entsprechend zusätzliche Verbindungsleitungen zwischen der Elektrodenstruktur aus Referenzelektrode 16-1 und Messelektrode 14, 14-1 auf dem Träger 12 und der Auswerteelektronik 34 entsprechend wie in den im Vorhergehenden beschriebenen Ausführungsbeispielen angeordnet. Daher sind bis auf die Ausgestaltung der Referenzelektrode 16-1 und der Messelektrode 14, 14-1 die obigen Ausführungen hinsichtlich der weiteren Elemente hier wieder entsprechend anwendbar.

Wie in Fig. 4 dargestellt ist, ist die ringförmige Referenzelektrode (gegenüber der Anordnung in Fig. 3) "zweigeteilt" ausgeführt, wobei ein Elektrodenabschnitt 14-1 elektrisch leitend mit der Messelektrode 14 verbunden ist. Ein weiterer Elektrodenabschnitt 16-1 bildet die resultierende Referenzelektrode. Aus Symmetriegründen können der erste und der zweite Referenzelektrodenabschnitt 14-1, 16-1 jeweils gleich ausgeführt sein und bezüglich beispielsweise der Anordnung in Fig. 3 jeweils als erste und zweite Hälfte 14-1, 16-1 der Referenzelektrode (16 bzgl. der Anordnung in Fig. 3) gebildet sein. Durch diese Ausbildung bzw. Unterteilung und Verschaltung der Elektrode mit dem Elektrodenabschnitt 14-1 (verbunden mit der Messelektrode 14) und der resultierenden Referenzelektrode 16-1 wird erreicht, dass die Umfangslänge zwischen dem resultierenden Referenzelektrodenabschnitt 16-1 und der ringförmigen Lötstruktur 20 (d.h. dem umlaufenden, ringförmigen Befestigungsabschnitt 20) einerseits und die Umfangslänge zwischen der Messelektrode 14, 14-1 einschließlich dem elektrisch verbundenen Elektrodenabschnitt 14-1 (d.h. der zusätzlichen Ringhälfte) und der ringförmigen Lötstruktur 20 andererseits gleich groß sind. Die beiden Umfangslängen des Referenzelektrodenabschnitts 16-1 und des der Messelektrode 14 elektrisch zugeschlagenen Ringhälfte 14-1 sind in Fig. 4 durch eine dickere Begrenzungslinie jeweils hervorgehoben und mit dem Bezugszeichen 14-1 und 16-1 versehen.

In Fig. 4 ist nun diese Ausführungsform eines kapazitiven Sensorelements 10 mit der entsprechend ausgebildeten Kondensatorelektrode 14, 14-1 und der elektrisch davon getrennten Referenzelektrode 16-1 dargestellt.

Fig. 5 zeigt nun eine schematische Schnittdarstellung eines weiteren kapazitiven Sensorelements 50 mit integrierter Mess- und Referenzkapazität zur kapazitiven Druckbestimmung gemäß einem weiteren Ausführungsbeispiel. Das in Fig. 5 dargestellte kapazitive Sensorelement 50 ist insbesondere zur primären Kompensation der dritten parasitären Kapazität $C_{par3}$ (Substratkapazität $C_{p,Substrat}$) vorgesehen.

Wie in Fig. 5 dargestellt ist, weist das kapazitive Sensorelement 50 einen Träger 12 mit einer Kondensatorelektrode 14 auf. Das kapazitive Sensorelement 50 weist ferner eine zumindest bereichsweise auslenkbare Membran 18 auf. Die Membran 18 weist einen als Kondensatorgegenelektrode wirksamen Auslenkungsbereich 18a und einen Randbereich 18b mit einem Membranbefestigungsabschnitt 18c auf, an dem die Membran 18 mechanisch mit einem z.B. umlaufenden Befestigungsabschnitt 20 an dem Träger 12 befestigt ist. Die Kondensatorelektrode 14 und die Kondensatorgegenelektrode 18a bilden die Messkapazität $C_{mess}$.

Die Referenzelektrodenanordnung 60 ist in verschiedene Metallisierungsebenen 12-1 bis 12-4 (z.B. Metallisierungslagen TOP, L1, L2, BOT) des Trägers 12 integriert und bildet die Referenzkapazität $C_{ref}$, deren Kapazitätswert zumindest eine Komponente eines auf die Messkapazität einwirkenden Störeinflusses $C_{par}$ (parasitäre Kapazität) wiedergibt.

Das kapazitive Element 50 mit integrierter Mess- und Referenzkapazität weist also den Träger 12 auf, an dessen Oberflächenbereich bzw. ersten Hauptoberfläche 12a (TOP) die Kondensatorelektrode 14 und der Befestigungsabschnitt 20 angeordnet sind. In den Träger bzw. das Substrat 12, (z.B. ein FR4-Substrat) ist die Referenzelektrodenanordnung 60 mit mehreren Metallisierungsstrukturen 60-1, 60-2, 60-3 in mehreren Lagen (L1, L2, Bot) des Trägers 12 angeordnet. Die Kondensatorelektrode/Messelektrode 14 und die Kondensatorgegenelektrode 18a bilden die Messkapazität $C_{mess}$ des kapazitiven Sensorelements 50. Die Referenzelektrodenanordnung 60 ist also in den Träger 12 bzw. in mehrere Ebenen des Trägers 12 integriert und bildet die Referenzkapazität $C_{ref}$, deren Kapazitätswert zumindest eine Komponente eines auf die Messkapazität $C_{mess}$ einwirkenden Störeinflusses wiedergibt.

Bei der in Fig. 5 dargestellten Anordnung wird die Kompensation eines Störeinflusses durch die Referenzelektrodenanordnung 60 erreicht, die einen Referenzkapazitätswert $C_{Ref}$ (auch $C_{Komp, Substrat}$) bereitstellt, um den auf die Messkapazität $C_{mess}$ einwirkenden Störeinfluss, d.h. die entsprechende dritte, parasitäre Kapazität $C_{par3}$ (Substratkapazität $C_{p, Substrat}$) zu beschreiben.

Wie in Fig. 5 dargestellt ist, weist die Referenzelektrodenanordnung 60 drei Referenzelektrodenstrukturen 60-1, 60-2 und 60-3 in unterschiedlichen Metallisierungslagen 12-2, 12-3 und 12-4 des Substrats 12 auf. Die erste Referenzelektrodenstruktur 60-1 ist nun in der zweiten Metallisierungsebene 12-2 in einem Abstand $a_1$ unterhalb des Hauptoberflächenbereichs 12a des Trägers 12 mit der Messelektrode 14 und dem Befestigungsabschnitt 20 gebildet.

In einem vordefinierten Abstand $b_1$ in dem Substrat 12 sind zwei weitere Referenzelektrodenstrukturen 60-2 in der Metallisierungsebene 12-3 ($L_2$) und die weitere Referenzelektrodenstruktur 60-3 in der weiteren Metallisierungsebene 12-4 (BOT) des Substrats 12 gebildet. Die beiden Referenzelektrodenstrukturen 60-2 und 60-3 sind nun im Wesentlichen identisch zu der Anordnung aus Messelektrode 14 mit Befestigungsabschnitt 20 und gegenüberliegender Referenzelektrodenstruktur 60-1 ausgeführt, so dass die durch die Referenzelektrodenstrukturen 60-2 und 60-3 gebildete Referenzkapazität $C_{Ref}$ (auch $C_{Komp,Substrat}$) im Wesentlichen (z.B. innerhalb eines Toleranzbereichs von 10%) identisch zu der auf die Messelektrode 14 einwirkende Substratkapazität $C_{p,Substrat}$ (bezogen auf die erste Referenzelektrodenstruktur 60-1) ausgebildet ist.

Wie in Fig. 5 gezeigt ist, ist die in den Lagen 12-3 und 12-4 (L2 und BOT) angeordnete Referenzelektrodenstruktur möglichst identisch mit der in den Ebenen 12-1 und 12-2 (TOP und L1) angeordneten Metallisierungen in bzw. an dem Träger 12. Auf diese Weise wird durch die Referenzstrukturen 60-2 und 60-3 in dem Träger 12 eine Referenzelektrodenanordnung mit einem resultierenden Kapazitätswert $C_{komp,Substrat}$ erzeugt, die der parasitären Substratkapazität zwischen der Kondensatorelektrode/Messelektrode 14 und der Metallisierung 60-1 in der Ebene L1 entspricht. Damit kann äußerst effektiv basierend auf der auslesbaren Kompensationskapazität $C_{Ref}$ (gebildet aus den Metallisierungen in den Ebenen L2 und BOT) die auf die Messelektrode 14 einwirkende dritte parasitäre Kapazität $C_{par3}$ (Substratkapazität $C_{P, Substrat}$) kompensiert werden. Mit der in Fig. 5 dargestellten Referenzelektrodenanordnung im Inneren der mehrlagigen Leiterplatte 12 wird also erreicht, dass beispielsweise die Feuchteaufnahme der Leiterplatte 12 über eine geometrisch möglichst identische Elektrodenstruktur 60-1, 60-2, 60-3 erfassbar ist und für die Kompensation des Sensorsignals verwendet werden kann.

Fig. 6 zeigt eine weitere schematische Schnittdarstellung eines kapazitiven Sensorelements 70 mit integrierter Mess- und Referenzkapazität, wobei die Referenzelektrodenanordnung 80 mit den Referenzelektrodenstrukturen 80-1, 80-2 in den Träger integriert ist und die Referenzkapazität $C_{Ref}$ bildet, deren Kapazitätswert zumindest eine Komponente eines auf die Messkapazität einwirkenden Störeinflusses, hier die parasitäre Substratkapazität $C_{par3}$ (auch $C_{p,Substrat}$), wiedergibt.

Wie in Fig. 6 dargestellt ist, weist die Referenzelektrodenanordnung 80 zwei Referenzelektrodenstrukturen 80-1 und 80-2 in unterschiedlichen Metallisierungslagen 12-2 und 12-3 des Substrats 12 auf. Die erste Referenzelektrodenstruktur 80-1 ist nun in der zweiten Metallisierungsebene 12-2 in einem Abstand $a_1$ unterhalb des Hauptoberflächenbereichs 12a des Trägers 12 mit der Messelektrode 14 gebildet. In einem vordefinierten Abstand $b_1$ in dem Substrat 12 ist eine weitere Referenzelektrodenstruktur 80-2 in der Metallisierungsebene 12-3 ($L_2$) des Substrats 12 gebildet. Die beiden Referenzelektrodenstrukturen 80-1 und 80-2 sind nun ausgeführt, so dass die erste Referenzelektrodenstruktur 80-1 mit der Kondensatorelektrode 14 die Substratkapazität $C_{p,Substrat}$ bildet, und die zweite Referenzelektrodenstruktur 80-2 mit der ersten Referenzelektrodenstruktur 80-1 die Referenzkapazität $C_{Komp,Substrat}$ bildet, wobei die Substratkapazität $C_{p,Substrat}$ und die Referenzkapazität $C_{Komp,Substrat}$ innerhalb eines Toleranzbereichs (von z.B. 10%) ein festes Verhältnis zueinander aufweisen.

Aufgrund der vorgegebenen Abmessungen und Beabstandungen der Referenzelektrodenstrukturen 80-1 und 80-2 zueinander bzw. der ersten Referenzelektrodenstruktur 80-1 zu der Metallisierung auf dem Hauptoberflächenbereich 12a des Substrats 12 kann also eine Referenzkapazität $C_{ref}$ erhalten werden, die innerhalb eines Toleranzbereichs (von z.B. 10%) in einem festen Zusammenhang zu der auf die Messkapazität $C_{mess}$ einwirkende parasitäre Substratkapazität $C_{par3}$ steht, so dass eine entsprechende Kompensation dieser parasitären Kapazität $C_{par3}$ ohne Weiteres bezogen auf die Messkapazität $C_{mess}$ durchgeführt werden kann.

Hinsichtlich der im Vorhergehenden anhand der Fig. 1 bis 5 beschriebenen erfindungsgemäßen Ausführungsbeispiele wird also eine Druckmessvorrichtung aus mindestens einer Membran 18 und einer zugeordneten Elektrodenanordnung gebildet. Die Membran und die zugeordnete Elektrodenanordnung können dabei beispielsweise in verschiedenen Herstellungsschritten bzw. Herstellungsverfahren jeweils zeitlich unabhängig voneinander an dem Substrat 12 integriert bzw. angeordnet und hergestellt werden. Dabei bilden die Membran 18 und die zugehörige Elektrodenanordnung mindestens eine Kapazität, z.B. die Messkapazität $C_{mess}$. Ferner ist eine weitere Referenzelektrodenanordnung vorgesehen, die eine auf die Messkapazität einwirkende Störgröße (Störkapazität) $C_{Ref}$ wiedergibt.

Entsprechend den Ausführungsbeispielen der vorliegenden Erfindung kann ein Teil 18a der Membran 18 bei Druckbeaufschlagung eine Kapazitätsänderung erzeugen, wobei ein weiterer Teil bzw. Abschnitt 18b der Membran 18 bei einer Druckbeaufschlagung eine signifikant geringere Kapazitätsänderung mit einer zugeordneten Referenzelektrodenstruktur erzeugt. Durch die Berechnung des Druckmesssignals aus beiden Kapazitätsänderungen kann ein resultierendes Druckmesssignal gebildet werden, das gegenüber einem Druckmesssignal aus der Kapazität $C_{mess}$ mit der größeren Kapazitätsänderung eine deutlich höhere Genauigkeit aufweist.

Gemäß weiteren Ausführungsbeispielen der vorliegenden Erfindung kann die Referenzkapazität $C_{Ref}$ auch durch weitere Metallisierungsstrukturen innerhalb bzw. an dem Substrat 12 gebildet werden, um die zur Erhöhung der Auswertegenauigkeit des resultierenden Druckmesssignals bereitzustellende Referenzkapazität $C_{Ref}$ zu bilden.

Durch die im Vorhergehenden anhand der Fig. 1 bis 6 beschriebenen erfindungsgemäßen Ausführungsbeispiele eines kapazitiven Sensorelements 10, 50 mit integrierter Mess- und Referenzkapazität können gegenüber herkömmlichen kapazitiven Druckmessvorrichtungen eine Reihe von Vorteilen erzielt werden. Durch die Integration der Referenzelektrode in der Messzelle ist keine zweite Membran erforderlich, so dass ein erheblich verringerter Platzbedarf auf der Schaltungsplatine ermöglicht wird. Aufgrund des verringerten Materialaufwands und einer erhöhten (möglichen) Packungsdichte auf dem Schaltungssubstrat lassen sich auch die Herstellungskosten für die Messzelle weiter verringern. Dabei ist insbesondere zu beachten, dass beim Auflöten der rotationssymmetrischen Membran 18 unter Verwendung eines Reflow-Lötprozesses eine sogenannte Selbstjustage der Membran 18 ausgenutzt werden kann, sodass sich der entsprechende Herstellungsprozess weiter vereinfachen lässt.

Darüber hinaus ist zu beachten, dass die Referenzelektrode und die Messelektrode räumlich sehr nahe beieinander liegend angeordnet sind, so dass die durch die Elektroden gebildete Messkapazität und Referenzkapazität jeweils den gleichen Umgebungsbedingungen, wie z.B. Luftfeuchtigkeit, Temperatur, etc., ausgesetzt sind. Damit kann der Einfluss der jeweiligen Umgebungsbedingung(en) auf die Messkapazität äußerst genau bestimmt und entsprechend exakt kompensiert werden.

Die im Vorhergehenden anhand der Fig. 1 bis 6 beschriebenen erfindungsgemäßen Ausführungsbeispiele eines kapazitiven Sensorelements 10, 50 mit integrierter Mess- und Referenzkapazität sind beispielsweise zur Füllstandmessung in Haushaltsgeräten, wie z.B. Waschmaschinen, oder auch in Tanks und Behältern (z.B. von Harnstoff für die Abgasbehandlung) anwendbar. Bei solchen Anwendungen ist häufig mit einer relativ feuchten und auch warmen Umgebungsatmosphäre (Umgebungsluft) zu rechnen, so dass eine erforderliche Kompensation des Einflusses von Temperatur und/oder Luftfeuchte durch die integrierte Referenzkapazität sehr zuverlässig) und exakt erreicht werden kann.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kapazitives Sensorelement (10) mit integrierter Mess- und Referenzkapazität, mit folgenden Merkmalen:

   einem Träger (12), der eine Kondensatorelektrode (14) und eine elektrisch davon getrennte Referenzelektrode (16) aufweist; und
   einer bereichsweise auslenkbaren Membran (18) mit einem als Kondensatorgegenelektrode wirksamen Auslenkungsbereich (18a) und einem Randbereich (18b), wobei die Membran an einem Befestigungsabschnitt (20) an dem Träger (12) befestigt ist, und wobei die Kondensatorelektrode (14) und die Kondensatorgegenelektrode (18a) die Messkapazität ($C_{mess}$) bilden;
   wobei die Referenzelektrode (16) zumindest mit einem als Referenzgegenelektrode wirksamen Abschnitt des Randbereichs (18b) der Membran (18) die Referenzkapazität ($C_{ref}$) bildet, deren Kapazitätswert zumindest eine Komponente eines auf die Messkapazität ($C_{mess}$) einwirkenden Störeinflusses ($C_{par}$) wiedergibt; und
   wobei der als Referenzgegenelektrode wirksame Abschnitt des Randbereichs (18b) der Membran (18) eine Erhöhung aufweist, wobei die Erhöhung ausgebildet ist, um einer größere Beabstandung zwischen der Referenzelektrode (16) und der Referenzgegenelektrode (18b) bei der Referenzkapazität ($C_{ref}$) als die Beabstandung der Kondensatorelektrode (14) und der gegenüberliegenden Kondensatorgegenelektrode (18a) bei der Messkapazität ($C_{mess}$) zu erhalten.

2. Kapazitives Sensorelement (10) gemäß Anspruch 1, wobei die bereichsweise auslenkbare Membran (18) als eine metallische Membran ausgebildet ist oder eine auf einem Oberflächenbereich aufgebrachte Metallisierung aufweist.

3. Kapazitives Sensorelement (10) gemäß einem der Ansprüche 1 oder 2, wobei der Träger ein Substrat aus einem isolierenden Material aufweist.

**4.** Kapazitives Sensorelement (10) gemäß einem der vorhergehenden Ansprüche, wobei die Referenzelektrode (16) ringförmig ausgebildet ist und zumindest bereichsweise dem Randbereich (18b) gegenüberliegt.

**5.** Kapazitives Sensorelement (10) gemäß einem der vorhergehenden Ansprüche, wobei der Randbereich (18b) einen Membranbefestigungsabschnitt (18c) aufweist, an dem die Membran (18) mit dem Befestigungsabschnitt (20) des Trägers (12) verbunden ist, und wobei sich der Randbereich (18b) von dem Auslenkungsbereich (18a) zu dem Membranbefestigungsbereich (18c) erstreckt.

**6.** Kapazitives Sensorelement (10) gemäß einem der vorhergehenden Ansprüche, wobei der Membranbefestigungsabschnitt (18c) der Membran (18) mittels eines Weichlotmaterials an dem Befestigungsabschnitt (20) des Trägers (12) befestigt ist.

**7.** Kapazitives Sensorelement (50) mit integrierter Mess- ($C_{mess}$) und Referenzkapazität ($C_{ref}$), mit folgenden Merkmalen:

einem Träger (12), der eine Kondensatorelektrode (14) und eine Referenzelektrodenanordnung (60; 80) aufweist; und
einer bereichsweise auslenkbaren Membran (18) mit einem als Kondensatorgegenelektrode wirksamen Auslenkungsbereich (18a) und einem Randbereich (18b), wobei die Membran an einem Befestigungsabschnitt (20) an dem Träger (12) befestigt ist, und wobei die Kondensatorelektrode (14) und die Kondensatorgegenelektrode (18a) die Messkapazität ($C_{mess}$) bilden;
wobei die Referenzelektrodenanordnung (60) in Metallisierungsebenen (12-1, 12-2, 12-3, 12-4) des Trägers (12) integriert ist und die Referenzkapazität ($C_{ref}$) bildet, deren Kapazitätswert zumindest eine Komponente eines auf die Messkapazität einwirkenden Störeinflusses ($C_{par}$) wiedergibt,
wobei die Referenzelektrodenanordnung (60) eine erste, eine zweite und eine dritte Referenzelektrodenstruktur (60-1, 60-2, 60-3) aufweist, die in unterschiedliche Metallisierungslagen des Trägers (12) integriert sind, und
wobei die erste Referenzelektrodenstruktur (60-1) mit der Kondensatorelektrode (14) eine Substratkapazität ($C_{p,Substrat}$) bildet, und die zweite Referenzelektrodenstruktur (60-2) mit der dritten Referenzelektrodenstruktur (60-3) die Referenzkapazität ($C_{Komp,Substrat}$; $C_{ref}$) bildet, wobei die Substratkapazität ($C_{p,Substrat}$) und die Referenzkapazität ($C_{Komp,Substrat}$ ; $C_{ref}$) innerhalb eines Toleranzbereichs gleich sind.

**8.** Kapazitives Sensorelement (70) mit integrierter Mess- ($C_{mess}$) und Referenzkapazität ($C_{ref}$), mit folgenden Merkmalen:

einem Träger (12), der eine Kondensatorelektrode (14) und eine Referenzelektrodenanordnung (80) aufweist; und
einer bereichsweise auslenkbaren Membran (18) mit einem als Kondensatorgegenelektrode wirksamen Auslenkungsbereich (18a) und einem Randbereich (18b), wobei die Membran an einem Befestigungsabschnitt (20) an dem Träger (12) befestigt ist, und wobei die Kondensatorelektrode (14) und die Kondensatorgegenelektrode (18a) die Messkapazität ($C_{mess}$) bilden;
wobei die Referenzelektrodenanordnung (80) in Metallisierungsebenen (12-1, 12-2, 12-3, 12-4) des Trägers (12) integriert ist und die Referenzkapazität ($C_{ref}$) bildet, deren Kapazitätswert zumindest eine Komponente eines auf die Messkapazität einwirkenden Störeinflusses ($C_{par}$) wiedergibt,
wobei die Referenzelektrodenanordnung (80) eine erste und eine zweite Referenzelektrodenstruktur (80-1, 80-2) aufweist, die in unterschiedliche Metallisierungslagen des Trägers (12) integriert sind, wobei die erste Referenzelektrodenstruktur (80-1) mit der Kondensatorelektrode (14) eine Substratkapazität ($C_{p,Substrat}$) bildet, und die zweite Referenzelektrodenstruktur (80-2) mit der ersten Referenzelektrodenstruktur (80-1) die Referenzkapazität ($C_{Komp,Substrat}$ ; $C_{ref}$) bildet, wobei die Substratkapazität ($C_{P,Substrat}$) und die Referenzkapazität ($C_{Komp,Substrat}$ ; $C_{ref}$) innerhalb eines Toleranzbereichs ein festes Verhältnis zueinander aufweisen.

**9.** Kapazitives Sensorelement (50; 70) gemäß Anspruch 7 oder 8, wobei die bereichsweise auslenkbare Membran (18) als eine metallische Membran ausgebildet ist oder eine auf einem Oberflächenbereich aufgebrachte Metallisierung aufweist.

**10.** Kapazitives Sensorelement (50; 70) nach einem der Ansprüche 7 bis 9, wobei der Träger (12) ein Substrat aus einem isolierenden Material aufweist.

**11.** Kapazitives Sensorelement (50; 70) gemäß einem der Ansprüche 7 bis 10, wobei der Randbereich (18b) einen Membranbefestigungsabschnitt (18c) aufweist, an dem die Membran (18) mit dem Befestigungsabschnitt (20) des Trägers (12) verbunden ist, und wobei sich der Randbereich (18b) von dem Auslenkungsbereich (18a) zu dem Membranbefestigungsabschnitt (18c) erstreckt.

**12.** Kapazitives Sensorelement (50; 70) gemäß einem der Ansprüche 7 bis 11, wobei der Membranbefestigungsabschnitt (18c) der Membran (18) mittels eines Weichlotmaterials an dem Befestigungsabschnitt (20) des Trägers (12) befestigt ist.

## Claims

**1.** Capacitive sensor element (10) having integrated measuring and reference capacitance, comprising:

a support (12) comprising a capacitor electrode (14) and a reference electrode (16) electrically separated therefrom; and
a membrane (18) that can be deflected in at least one area and comprises a deflection area (18a) effective as a capacitor counterelectrode and a margin area (18b), the membrane being fastened to the support (12) at a fastening portion (20), and the capacitor electrode (14) and the capacitor counterelectrode (18a) forming the measuring capacitance ($C_{mess}$);
wherein the reference electrode (16) forms, at least with one portion of the margin area (18b) of the membrane (18) that is effective as the reference counterelectrode, the reference capacitance ($C_{ref}$), the capacitance value of which represents at least one component of an interference effect ($C_{par}$) acting on the measuring capacitance ($C_{mess}$); and
wherein that portion of the margin area (18b) of the membrane (18) that is effective as the reference counterelectrode comprises an elevation, said elevation being configured to obtain a distance between the reference electrode (16) and the reference counterelectrode (18b) at the reference capacitance ($C_{ref}$) that is larger than the distance between the capacitor electrode (14) and the oppositely located capacitor counterelectrode (18a) at the measuring capacitance ($C_{mess}$).

**2.** Capacitive sensor element (10) as claimed in claim 1, wherein the membrane (18) which can be deflected in at least one area is configured as a metallic membrane or comprises a metallization applied onto a surface area.

**3.** Capacitive sensor element (10) as claimed in any of claims 1 or 2, wherein the support includes a substrate of an insulating material.

**4.** Capacitive sensor element (10) as claimed in any of the previous claims, wherein the reference electrode (16) is configured to be annular and is located opposite the margin area (18b) at least in one area.

**5.** Capacitive sensor element (10) as claimed in any of the previous claims, wherein the margin area (18b) comprises a membrane fastening portion (18c) at which the membrane (18) is connected to the fastening portion (20) of the support (12), and wherein the margin area (18b) extends from the deflection area (18a) to the membrane fastening area (18c).

**6.** Capacitive sensor element (10) as claimed in any of the previous claims, wherein the membrane fastening portion (18c) of the membrane (18) is fastened to the fastening portion (20) of the support (12) by means of a soft solder material.

**7.** Capacitive sensor element (50) comprising integrated measuring ($C_{mess}$) and reference capacitances ($C_{ref}$), comprising:

a support (12) comprising a capacitor electrode (14) and a reference electrode assembly (60; 80); and
a membrane (18) that can be deflected in at least one area and comprises a deflection area (18a) effective as a capacitor counterelectrode and a margin area (18b), the membrane being fastened to the support (12) at a fastening portion (20), and the capacitor electrode (14) and the capacitor counterelectrode (18a) forming the measuring capacitance ($C_{mess}$);
wherein the reference electrode assembly (60) is integrated in metallization planes (12-1, 12-2, 12-3, 12-4) of the support (12) and forms the reference capacitance ($C_{ref}$), the capacitance value of which represents at least one component of an interference effect ($C_{par}$) acting on the measuring capacitance ($C_{mess}$),
wherein the reference electrode assembly (60) comprises first, second and third reference electrode structures (60-1, 60-2, 60-3) which are integrated in different metallization layers of the support (12), and
wherein the first reference electrode structure (60-1) forms a substrate capacitance ($C_{p,substrat}$) together with the capacitor electrode (14), and the second reference electrode structure (60-2) forms the reference capacitance ($C_{Komp,Substrat;}$ $C_{ref}$) together with the third reference electrode structure (60-3), the substrate capacitance ($C_{p,Substrat}$) and the reference capacitance ($C_{Komp,Substrat;}$ $C_{ref}$) being identical within a tolerance range.

**8.** Capacitive sensor element (70) comprising integrated measuring ($C_{mess}$) and reference capacitances ($C_{ref}$), comprising:

a support (12) comprising a capacitor electrode (14) and a reference electrode assembly (80);

and

a membrane (18) that can be deflected in at least one area and comprises a deflection area (18a) effective as a capacitor counterelectrode and a margin area (18b), the membrane being fastened to the support (12) at a fastening portion (20), and the capacitor electrode (14) and the capacitor counterelectrode (18a) forming the measuring capacitance ($C_{mess}$);

wherein the reference electrode assembly (80) is integrated in metallization planes (12-1, 12-2, 12-3, 12-4) of the support (12) and forms the reference capacitance ($C_{ref}$), the capacitance value of which represents at least one component of an interference effect ($C_{par}$) acting on the measuring capacitance ($C_{mess}$),

wherein the reference electrode assembly (80) comprises first and second reference electrode structures (80-1, 80-2) which are integrated in different metallization layers of the support (12), wherein the first reference electrode structure (80-1) forms a substrate capacitance ($C_{p,Substrat}$) together with the capacitor electrode (14), and the second reference electrode structure (80-2) forms the reference capacitance ($C_{Komp,Substrat}$ $C_{ref}$) together with the first reference electrode structure (80-1), the substrate capacitance ($C_{p,Substrat}$) and the reference capacitance ($C_{Komp,Substrat;}$ $C_{ref}$) having a fixed mutual relationship within a tolerance range.

**9.** Capacitive sensor element (50; 70) as claimed in claim 7 or 8, wherein the membrane (18) which can be deflected in at least one area is configured as a metallic membrane or comprises a metallization applied onto a surface area.

**10.** Capacitive sensor element (50; 70) as claimed in any of claims 7 to 9, wherein the support includes a substrate of an insulating material.

**11.** Capacitive sensor element (50; 70) as claimed in any of claims 7 to 10, wherein the margin area (18b) comprises a membrane fastening portion (18c) at which the membrane (18) is connected to the fastening portion (20) of the support (12), and wherein the margin area (18b) extends from the deflection area (18a) to the membrane fastening area (18c).

**12.** Capacitive sensor element (50; 70) as claimed in any of claims 7 to 11, wherein the membrane fastening portion (18c) of the membrane (18) is fastened to the fastening portion (20) of the support (12) by means of a soft solder material.

## Revendications

**1.** Elément capteur capacitif (10) à capacité de mesure et de référence intégrée, aux caractéristiques suivantes:

un support (12) qui présente une électrode de condensateur (14) et une électrode de référence (16) séparée électriquement de cette dernière; et

une membrane pouvant être déviée dans au moins une zone (18) et comprenant une zone de déviation (18a) agissant comme contre-électrode de condensateur et une zone de bord (18b), où la membrane est fixée par un segment de fixation (20) au support (12), et où l'électrode de condensateur (14) et la contre-électrode de condensateur (18a) forment la capacité de mesure ($C_{mess}$);

dans lequel l'électrode de référence (16) forme, au moins avec un segment de la zone de bord (18b) de la membrane (18)qui agit comme contre-électrode de référence, la capacité de référence ($C_{ref}$) dont la valeur de capacité reproduit au moins une composante d'une perturbation ($C_{par}$) agissant sur la capacité de mesure ($C_{mess}$); et

dans lequel le segment de la zone de bord (18b) de la membrane (18) qui agit comme contre-électrode de référence présente une élévation, où l'élévation est conçue pour obtenir une distance entre l'électrode de référence (16) et la contre-électrode de référence (18b) à la capacité de référence ($C_{ref}$) qui est supérieure à la distance entre l'électrode de condensateur (14) et la contre-électrode de condensateur opposée (18a) à la capacité de mesure ($C_{mess}$).

**2.** Elément capteur capacitif (10) selon la revendication 1, dans lequel la membrane (18) pouvant être déviée dans au moins une zone est conçue comme une membrane métallique ou présente une métallisation apportée sur une zone de surface.

**3.** Elément capteur capacitif (10) selon l'une des revendications 1 ou 2, dans lequel le support présente un substrat en un matériau isolant.

**4.** Elément capteur capacitif (10) selon l'une des revendications précédentes, dans lequel l'électrode de référence (16) est conçue de forme annulaire et est opposée au moins dans au moins une zone à la zone de bord (18b).

**5.** Elément capteur capacitif (10) selon l'une des revendications précédentes, dans lequel la zone de bord (18b) présente un segment de fixation de membrane (18c) auquel la membrane (18) est connectée par le segment de fixation (20) du support (12), et dans lequel la zone de bord (18b) s'étend de la zone de déviation (18a) à la zone de fixation de membrane (18c).

**6.** Elément capteur capacitif (10) selon l'une des revendications précédentes, dans lequel le segment de fixation de membrane (18c) de la membrane (18) est fixé au segment de fixation (20) du support (12) au moyen d'un matériau de brasage tendre.

**7.** Elément capteur capacitif (50) à capacité de mesure ($C_{mess}$) et de référence ($C_{ref}$) intégrée, aux caractéristiques suivantes:

un support (12) qui présente une électrode de condensateur (14) et un aménagement d'électrodes de référence (60; 80); et
une membrane (18) pouvant être déviée dans au moins une zone et comprenant une zone de déviation (18a) agissant comme contre-électrode de condensateur et une zone de bord (18b), où la membrane est fixée par un segment de fixation (20) au support (12), et où l'électrode de condensateur (14) et la contre-électrode de condensateur (18a) forment la capacité de mesure ($C_{mess}$);
dans lequel l'aménagement d'électrodes de référence (60) est intégré dans des plans de métallisation (12-1, 12-2, 12-3, 12-4) du support (12) et forme la capacité de référence ($C_{ref}$) dont la valeur de capacité reproduit au moins une composante d'une perturbation ($C_{par}$) agissant sur la capacité de mesure,
dans lequel l'aménagement d'électrodes de référence (60) présente une première, une deuxième et une troisième structure d'électrode de référence (60-1, 60-2, 60-3) qui sont intégrées dans différentes couches de métallisation du support (12), et
dans lequel la première structure d'électrode de référence (60-1) forme, avec l'électrode de condensateur (14), une capacité de substrat ($C_{p,Substrat}$), et la deuxième structure d'électrode de référence (60-2) forme, avec la troisième structure d'électrode de référence (60-3), la capacité de référence ($C_{Komp,Substrat}$; $C_{ref}$), où la capacité de substrat ($C_{p,Substrat}$) et la capacité de référence ($C_{Komp,Substrat}$; $C_{ref}$) sont identiques dans les limites d'une plage de tolérance.

**8.** Elément capteur capacitif (70) à capacité de mesure ($C_{mess}$) et de référence ($C_{ref}$) intégrée, aux caractéristiques suivantes:

un support (12) qui présente une électrode de condensateur (14) et un aménagement d'électrodes de référence (80); et
une membrane (18) pouvant être déviée dans au moins une zone (18) et comprenant une zone de déviation (18a) agissant comme contre-électrode de condensateur et une zone de bord (18b), où la membrane est fixée par un segment de fixation (20) au support (12), et où l'électrode de condensateur (14) et la contre-électrode de condensateur (18a) forment la capacité de mesure ($C_{mess}$);
dans lequel l'aménagement d'électrodes de référence (80) est intégré dans des plans de métallisation (12-1, 12-2, 12-3, 12-4) du support (12) et forme la capacité de référence ($C_{ref}$) dont la valeur de capacité reproduit au moins une composante d'une perturbation ($C_{par}$) agissant sur la capacité de mesure,
dans lequel l'aménagement d'électrodes de référence (80) présente une première et une deuxième structure d'électrode de référence (80-1, 80-2) qui sont intégrées dans différentes couches de métallisation du support (12), dans lequel la première structure d'électrode de référence (80-1) forme, avec l'électrode de condensateur (14), une capacité de substrat ($C_{P,Substrat}$; $C_{ref}$), et la deuxième structure d'électrode de référence (80-2) forme, avec la première structure d'électrode de référence (80-1), la capacité de référence ($C_{Komp,Substrat}$; $C_{ref}$), dans lequel la capacité du substrat ($C_{P,Substrat}$) et la capacité de référence ($C_{Komp,Substrat}$; $C_{ref}$) présentent un rapport fixe entre elles dans les limites d'une plage de tolérance.

**9.** Elément capteur capacitif (50; 70) selon la revendication 7 ou 8, dans lequel la membrane (18) pouvant être déviée dans au moins une zone est conçue comme une membrane métallique ou présente une métallisation apportée sur une zone de surface.

**10.** Elément capteur capacitif (50; 70) selon l'une des revendications 7 à 9, dans lequel le support (12) présente un substrat en matériau isolant.

**11.** Elément capteur capacitif (50; 70) selon l'une des revendications 7 à 10, dans lequel la zone de bord (18b) présente un segment de fixation de membrane (18c) auquel la membrane (18) est connectée par le segment de fixation (20) du support (12), et dans lequel la zone de bord (18b) s'étend de la zone de déviation (18a) au segment de fixation de membrane (18c).

**12.** Elément capteur capacitif (50; 70) selon l'une des revendications 7 à 11, dans lequel le segment de fixation de membrane (18c) de la membrane (18) est fixé au segment de fixation (20) du support (1.2) au moyen d'un matériau de brasage tendre.

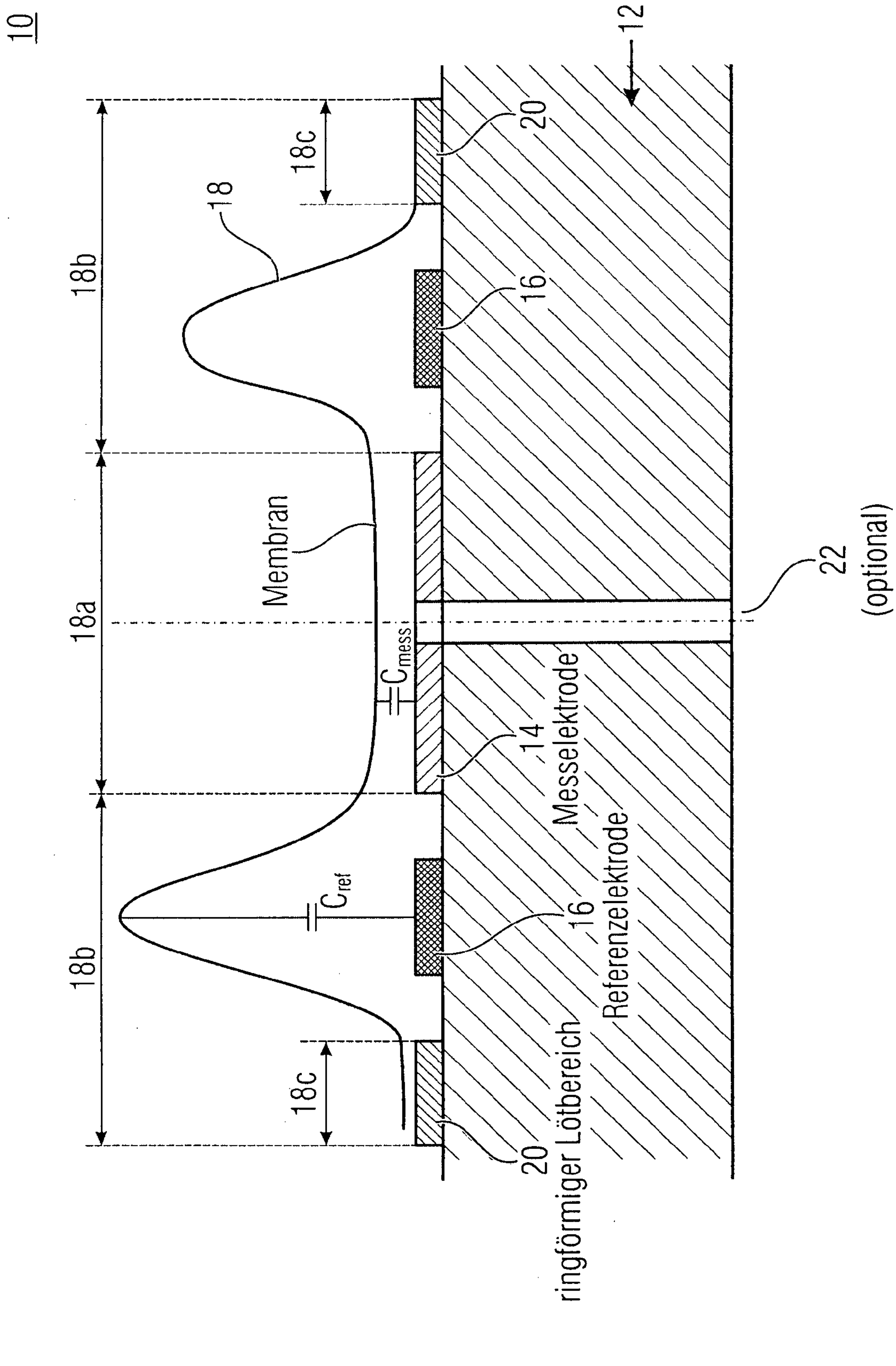
10
12
20
18c
18
18b
16
Membran
18a
22
(optional)
$C_{mess}$
14
Messelektrode
Referenzelektrode
$C_{ref}$
16
18b
18c
20
ringförmiger Lötbereich

FIG 1

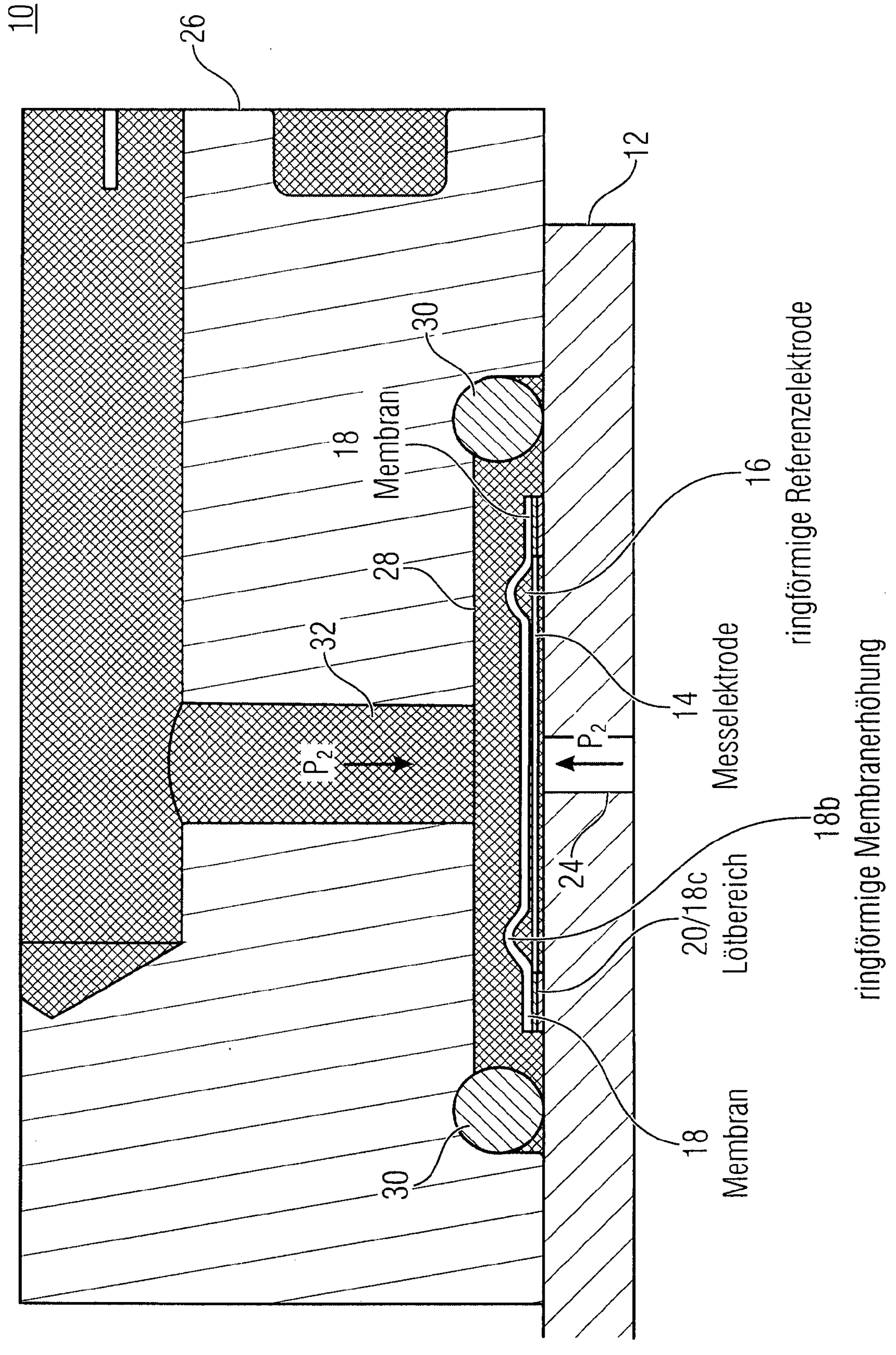
10
26
12
30
18
Membran
16
ringförmige Referenzelektrode
28
32
Messelektrode
14
P2
P2
24
18b
ringförmige Membranerhöhung
20/18c
Lötbereich
18
Membran
30

FIG 2

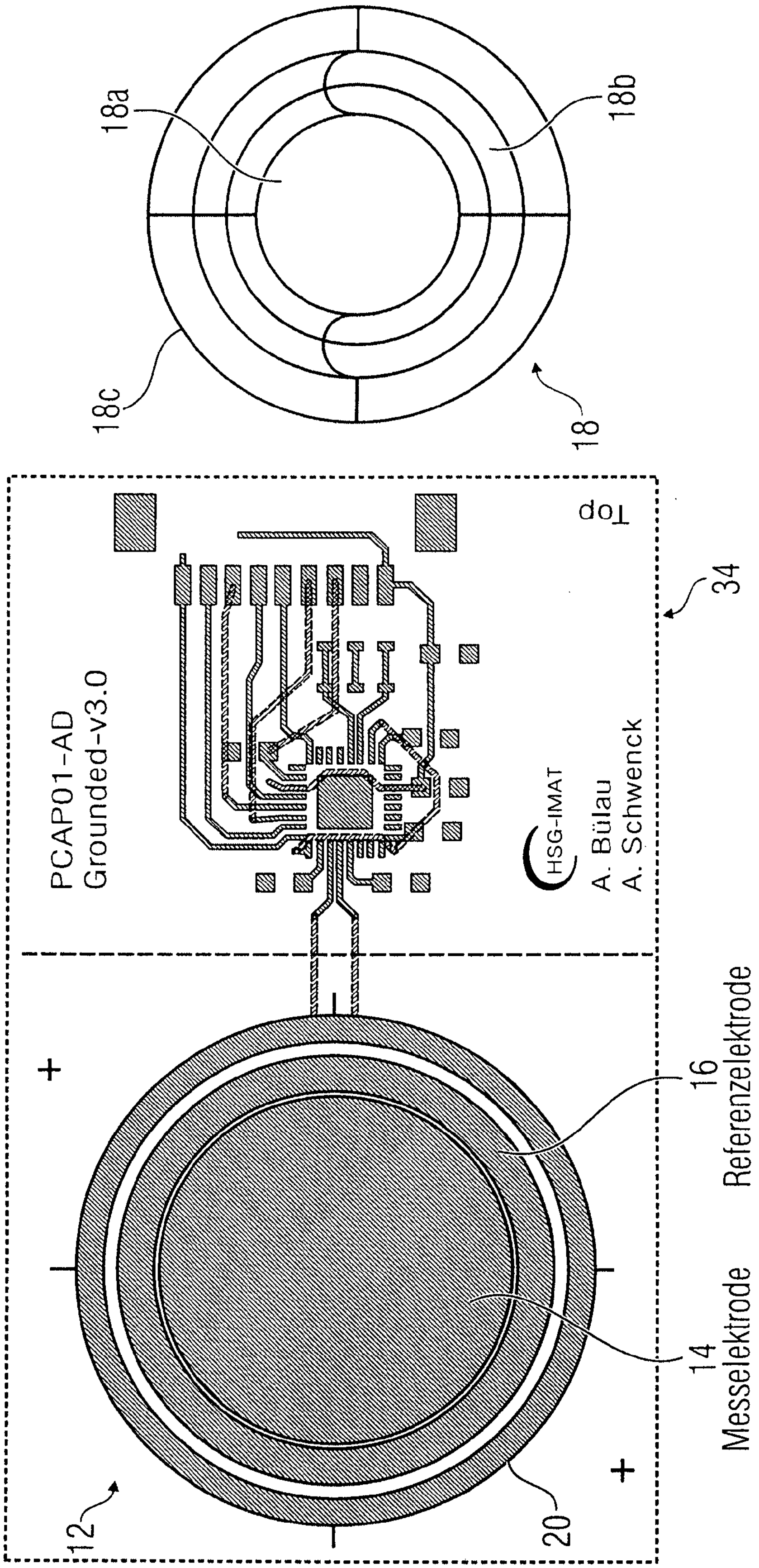
18a
18b
18c
18
PCAP01-AD
Grounded-v3.0
HSG-IMAT
A. Bülau
A. Schwenck
Top
34
12
20
14
Messelektrode
16
Referenzelektrode

FIG 3

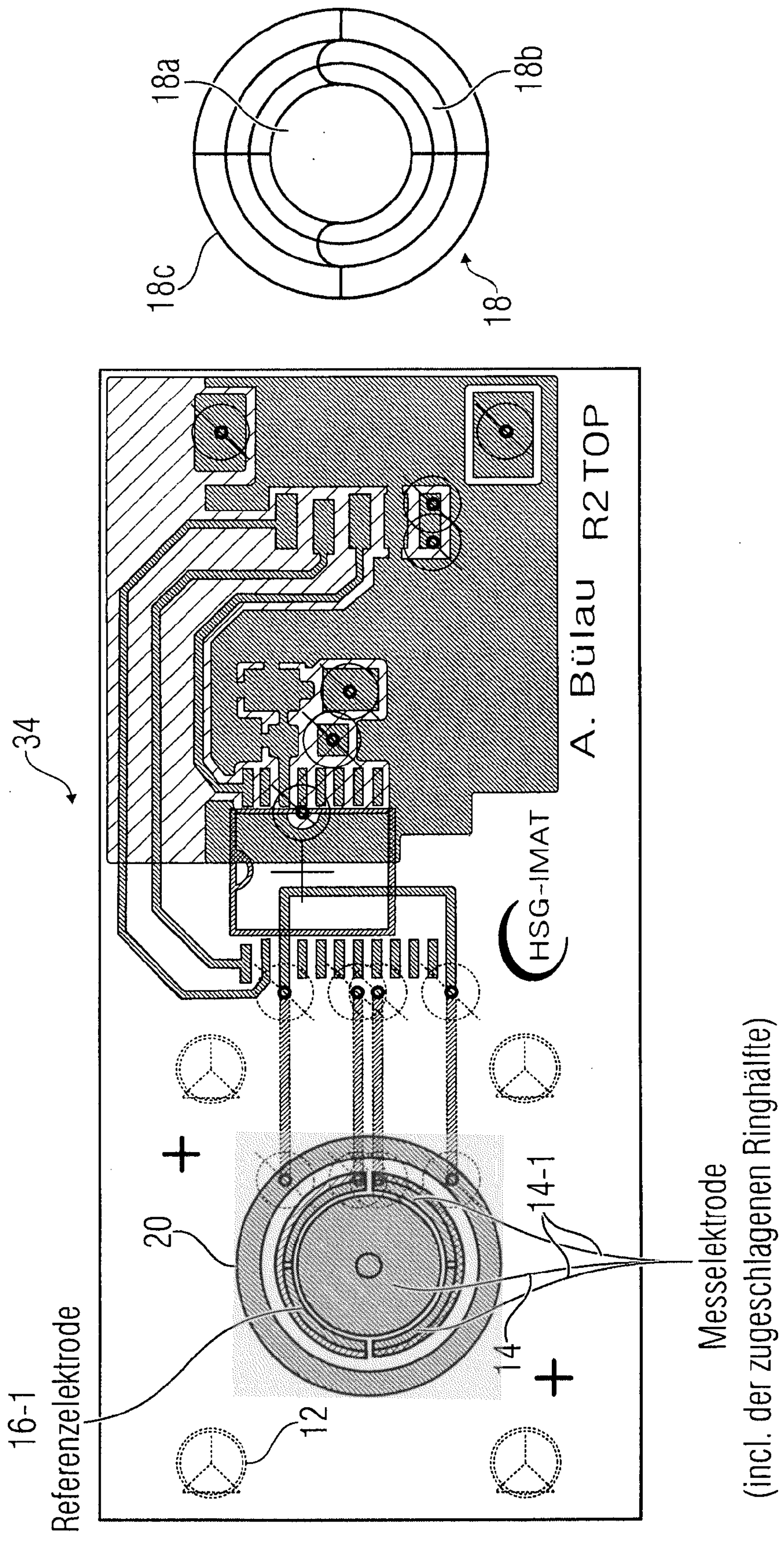

18a
18b
18c
18
34
A. Bülau R2 TOP
HSG-IMAT
16-1
Referenzelektrode
12
20
14-1
14
Messelektrode
(incl. der zugeschlagenen Ringhälfte)
14 + 14-1


FIG 4

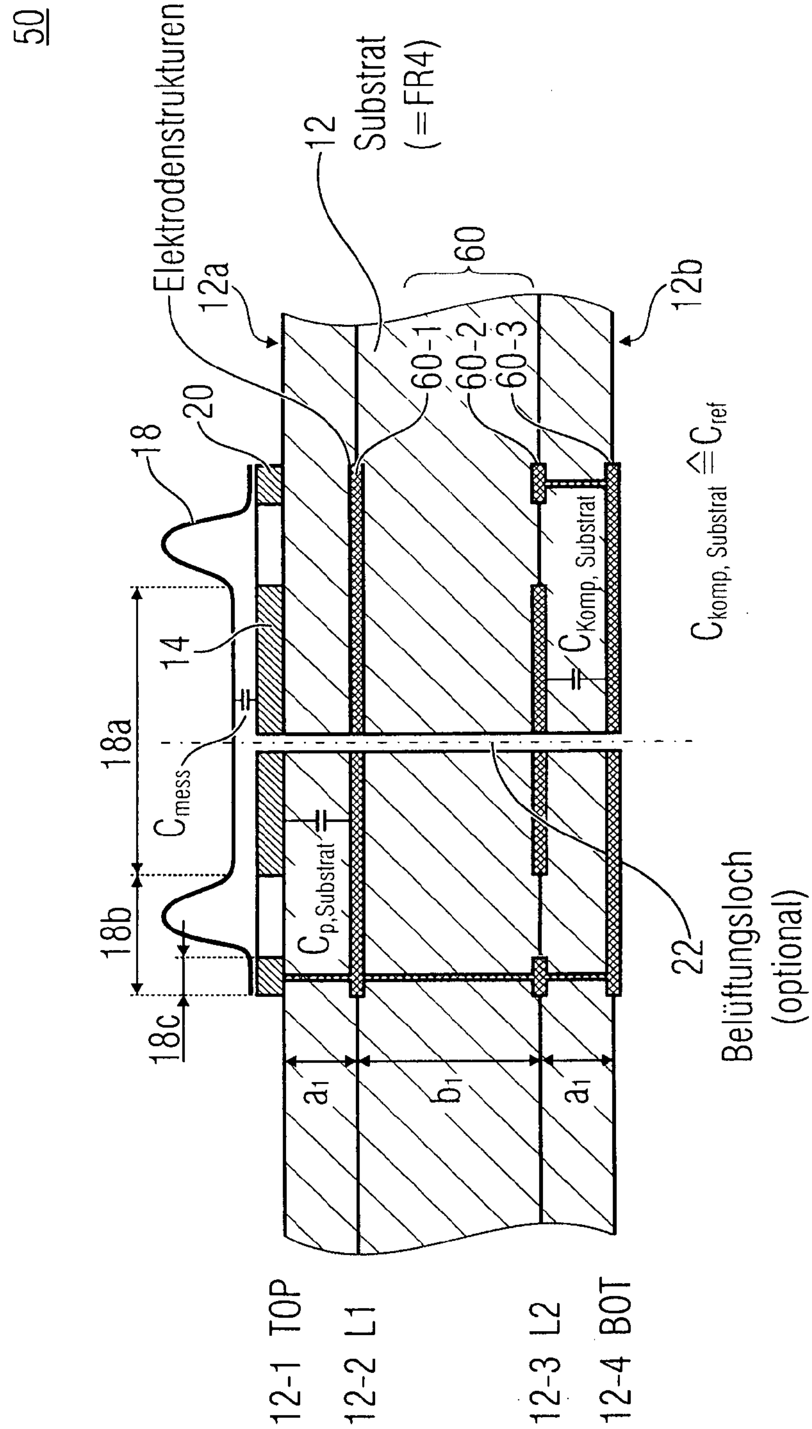
50
Elektrodenstrukturen
12
Substrat
(=FR4)
60
12a
12b
60-1
60-2
60-3
18
20
14
18a
18b
18c
$C_{mess}$
$C_{p,Substrat}$
$C_{Komp,\ Substrat}$
$C_{komp,\ Substrat} \triangleq C_{ref}$
22
Belüftungsloch
(optional)
$a_1$
$b_1$
$a_1$
12-1 TOP
12-2 L1
12-3 L2
12-4 BOT

FIG 5

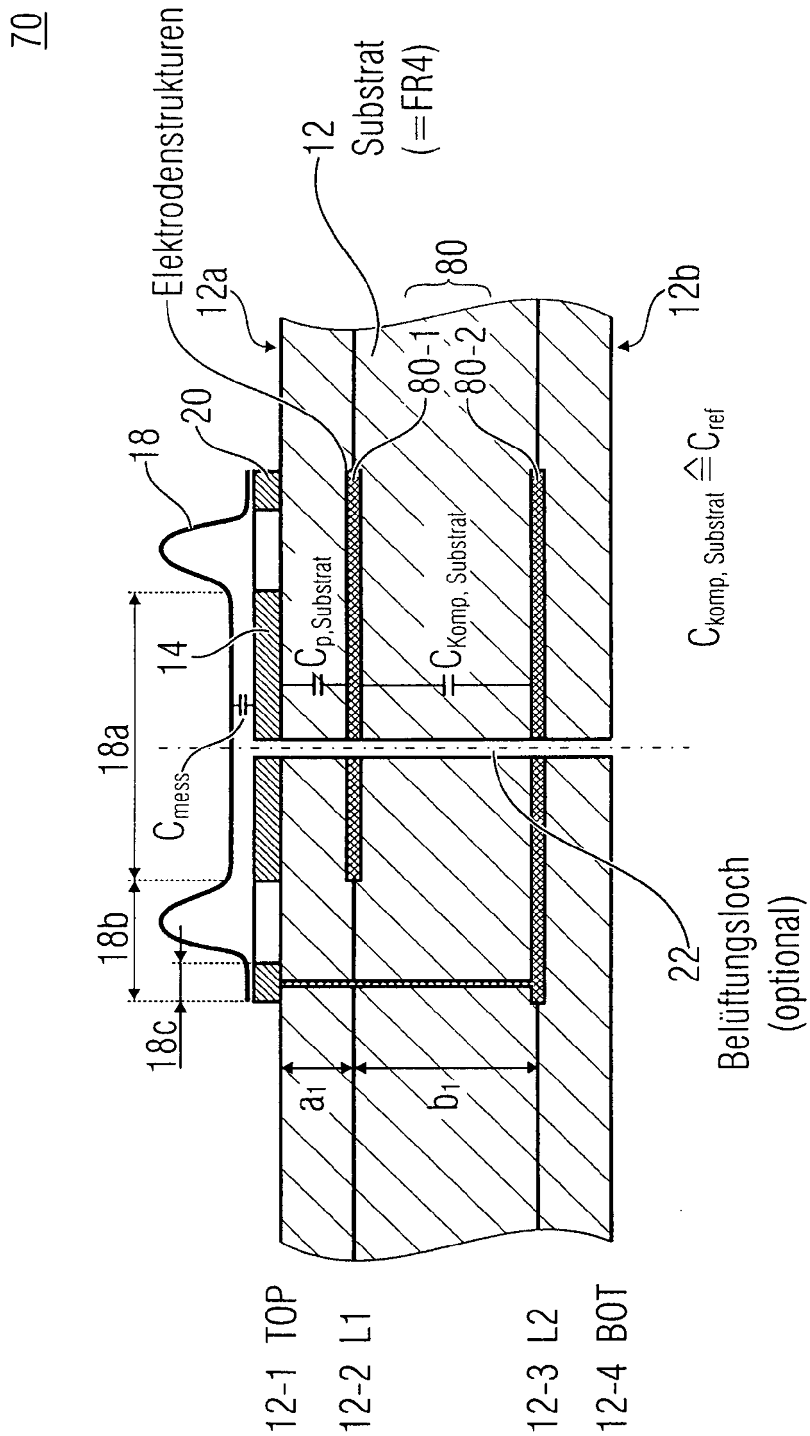
70
Elektrodenstrukturen
12
Substrat
(=FR4)
12a
80
80-1
80-2
12b
18
20
14
$C_{p,Substrat}$
$C_{Komp,\ Substrat}$
$C_{komp,\ Substrat} \hat{=} C_{ref}$
18a
$C_{mess}$
18b
18c
22
Belüftungsloch
(optional)
$a_1$
$b_1$
12-1 TOP
12-2 L1
12-3 L2
12-4 BOT

FIG 6

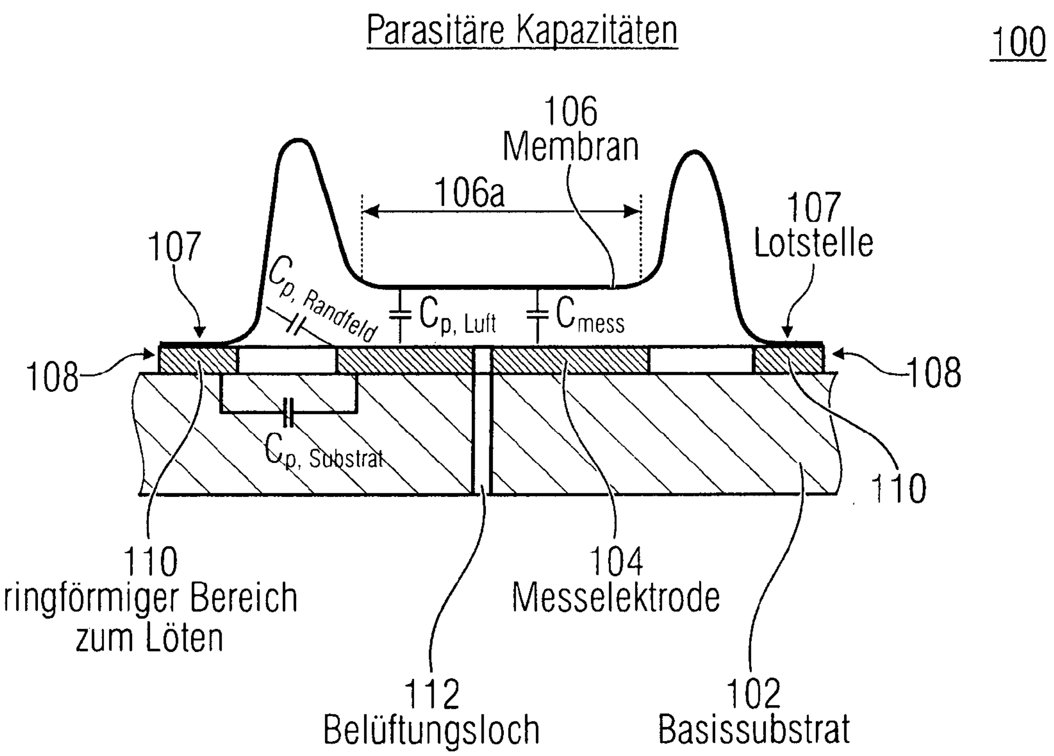
Parasitäre Kapazitäten
100
106
Membran
106a
107
107
Lotstelle
$C_{p, Randfeld}$
$C_{p, Luft}$
$C_{mess}$
108
108
$C_{p, Substrat}$
110
110
ringförmiger Bereich
zum Löten
104
Messelektrode
112
Belüftungsloch
102
Basissubstrat

FIG 7A

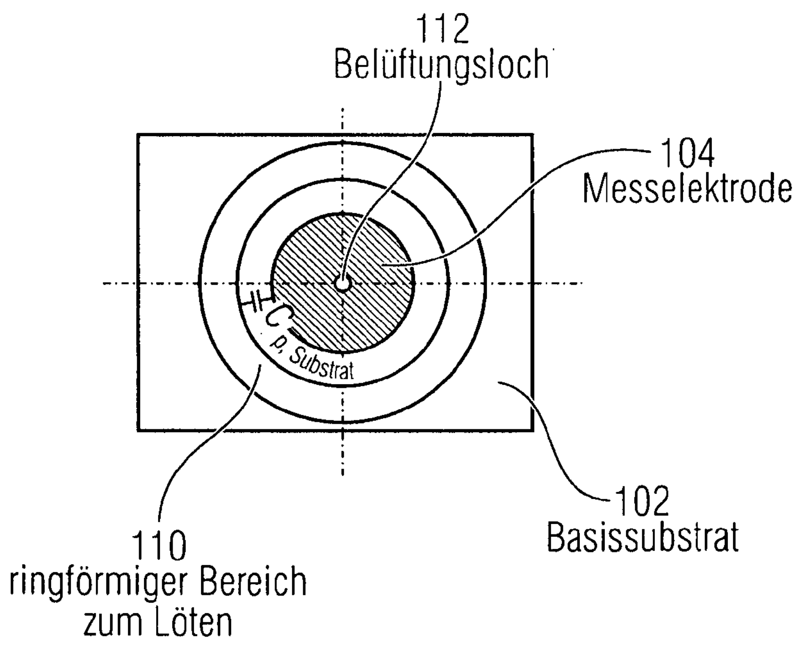
112
Belüftungsloch
104
Messelektrode
$C_{p, Substrat}$
102
Basissubstrat
110
ringförmiger Bereich
zum Löten

FIG 7B

Schaltung zur Kapazitäts-Spannungswandlung mit Referenzelement

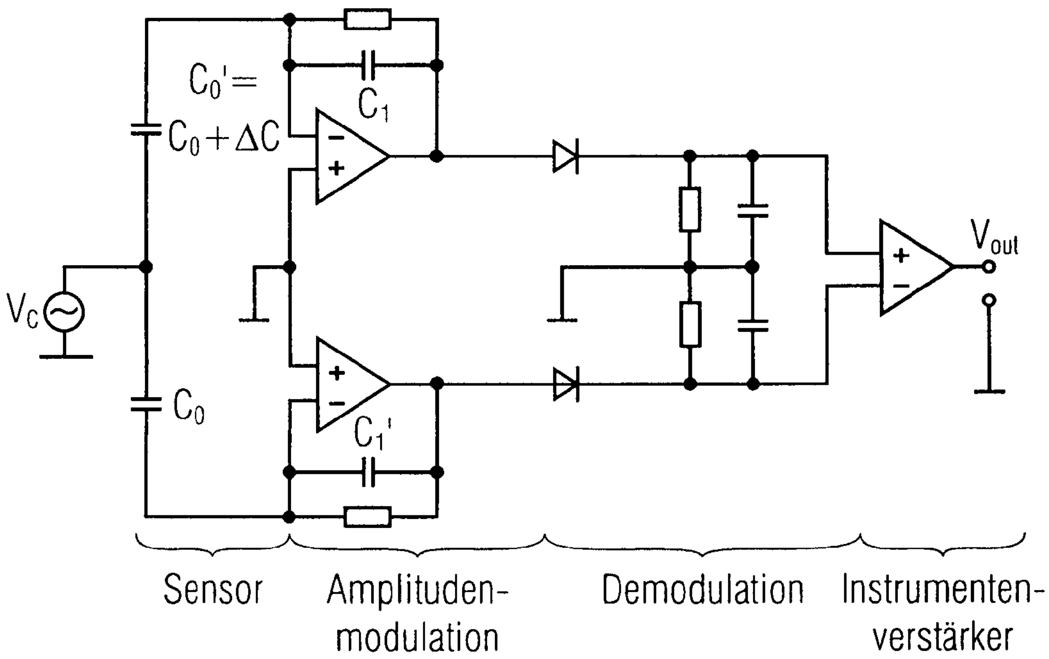


FIG 8
(STAND DER TECHNIK)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5451940 A
- DE 102011075822 A1
- EP 2317294 A1